# EUROPEAN PATENT SPECIFICATION

(11) **EP 4 027 840 B1**
(45) Date of publication and mention of the grant of the patent: **17.04.2024**
(21) Application number: 20786635.1
(22) Date of filing: 11.09.2020
(51) Int. Cl.: A47G 9/02, B33Y 80/00, A41D 31/06, A41G 11/02, B68G 1/00

(54) **THREE-DIMENSIONAL DOWN REPLACEMENT**
DREIDIMENSIONALER DAUNENERSATZ
REMPLACEMENT DE DUVET EN TROIS DIMENSIONS

(30) Priority: 13.09.2019 US 201962899969 P
(43) Date of publication of application: 20.07.2022
(73) Proprietor: The North Face Apparel Corp., Wilmington, DE 19810 (US)
(72) Inventor: OLSON, Cory Michael, Wilmington, Delaware 19810 (US); DORTON, Jeffrey Allen, Wilmington, Delaware 19810 (US)
(74) Representative: Riesen, Michael J.
(86) International application number: PCT/US2020/050298
(87) International publication number: WO 2021/050807

(56) References cited:
- US-A1- 2016 327 113
- US-A1- 2018 264 718
- US-A1- 2019 160 989

## Description

### BACKGROUND

Clothes, such as jackets, and other items, such as blankets, may need insulation. Animal feathers (e.g., down) may be used as the insulation. However, a sustainable form of insulation that can replace animal derived insulation is needed. Some synthetic down replacement is known. Examples are shown by US2018/264718, US2019/160989, and US2016327113. But, synthetic downs may not perform as well as conventional down. Thus, improvements are needed.

### SUMMARY

The present invention provides a three-dimensional insulative baffle and a manufacturing method of making such a baffle as claimed in claims 1 and 10. Preferred features are set out in the dependent claims.

### BRIEF DESCRIPTION OF THE DRAWINGS

The following drawings show generally, by way of example, but not by way of limitation, various examples discussed in the present disclosure. In the drawings:
FIG. 1 is a perspective view of an article comprising three baffles in accordance with the present invention.
FIG. 2 illustrates an enlarge view of a portion of FIG. 1.
FIG. 3 illustrates a top perspective view of a three-dimensional insulative baffle in accordance with the present invention.
FIG. 4 is a side perspective view of a portion of a three-dimensional insulative baffle in accordance with the present invention.
FIG. 5 is a side perspective view of a portion of a three-dimensional insulative baffle in accordance with the present invention.
FIG. 6 illustrates an example insulative baffle.

### DETAILED DESCRIPTION

Described herein are three-dimensionally (3D) printed structures to replace conventional insulation. Reference is made to down, such as goose down, but it should be understood that other insulative materials (e.g., synthetics) conventionally used in apparel may also be replaced or supplemented.

Described herein are three-dimensional insulative baffles and making such baffles to create a more sustainable solution than an animal derived product. Described herein are three-dimensional insulative baffles that may out perform any synthetic insulation currently on the market. Conventional synthetic insulation is limited to cut staple and continuous filament constructions that are modified in different ways. The three-dimensional insulative baffles described herein may use different substrates and different structures to achieve the purpose of trapping air (insulation). The 3D printed structures may comprise an initial state. The 3D printed structures may be compressed. During compression, the 3D printed structures may comprise a state different from the initial state. The 3D printed structures may return to the initial state after compression. The three-dimensional insulative baffles described herein may allow quick and efficient loft of a baffle structure that encapsulates a synthetic fill on a garment.

As described herein, air permeability may be tested using ASTM D737; hardness may be tested using ASTM D2240; and flex properties (3 point bend) may be tested using ASTM D790. Various articles or sample sizes may be tested. Other parameters and standards may be used.

According to the invention the three-dimensional insulative baffle comprises a first surface comprising by a plurality of first interconnected struts that define a plurality of first apertures through the first surface. The first surface comprises a curvilinear shape. The plurality of first interconnected struts may define a lattice structure. The first surface may be at least partially formed using additive manufacturing.

According to the invention, the three-dimensional insulative baffle comprises a second surface at least partially spaced from the first surface and having at least one common terminal connection point with the first surface. The first surface comprises a plurality of second interconnected struts that define a plurality of second apertures through the second surface. The second surface comprises a curvilinear shape. The plurality of second interconnected struts may define a lattice structure. The second surface may be at least partially formed using additive manufacturing.

The three-dimensional insulative baffle comprises one or more third struts disposed between the first surface and the second surface and coupled to at least one of the first surface and the second surface. The first surface and the second surface define a cavity therebetween The one or more third struts are disposed within or adjacent the cavity. The first surface and the second surface are capable of being deformed from a first state to a second state under a compression force to constrict a volume of the cavity. The first surface and the second surface are capable of returning to the first state when the compression force is released.

According to the invention, the three-dimensional insulative baffle comprises a generally half-column shape. A plurality of the third struts may define a lattice structure. The example insulative baffle may comprise a first layer disposed to cover at least a portion of the first surface. The example insulative baffle may comprise a second layer disposed to cover at least a portion of the second surface. A configuration of the first interconnected struts, the second interconnect struts, and the third struts may be tunable to control a rigidity of the example insulative baffle.

Articles, not being part of the claimed invention are described herein. An example article may comprise a first surface comprising a first lattice. The first surface may comprise a curvilinear shape. The first surface may be at least partially formed using additive manufacturing.

The example article may comprise a second surface at least partially spaced from the first surface and having at least one common terminal connection point with the first surface. The first surface may comprise a second lattice. The second surface may comprise a curvilinear shape. The second surface may be at least partially formed using additive manufacturing.

The first surface and the second surface may define a cavity therebetween. The first surface and the second surface may be capable of being deformed from a first state to a second state under a compression force to constrict a volume of the cavity. The first surface and the second surface may be capable of returning to the first state when the compression force is released.

The example article may comprise a generally half-column shape. The example article may comprise a generally rectangular cross-section. Various shapes and sizes may be used. The example article may comprise a first layer disposed to cover at least a portion of the first surface. The example article may comprise a second layer disposed to cover at least a portion of the second surface. A configuration of the first lattice and the second lattice may be tunable to control a rigidity of the example article.

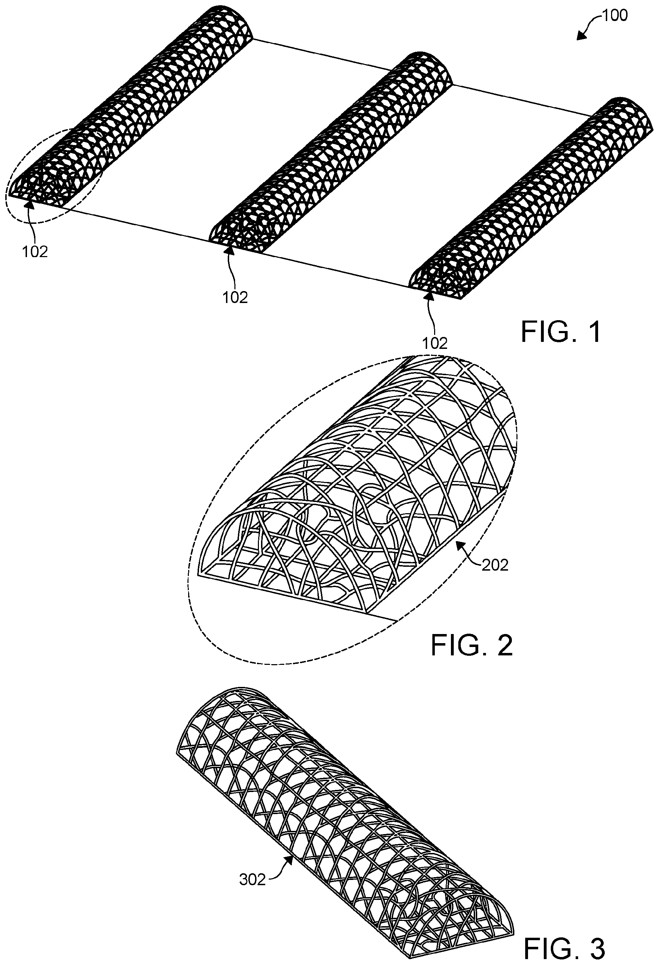

FIG. 1 illustrates an example article 100. The article 100 may form part of an item such as a garment, a blanket a back or body brace, backpack or bag. As shown, the article 100 comprises three baffles structures or baffles 102. Any number of baffles 102 may be used. The baffles 102 may have various shapes and sizes. The baffles 102 may be formed using various processes such as additive manufacturing. As show, the baffles may comprise a lattice structure having a plurality of interconnecting struts. A material may be disposed around the baffles 102. As such, the lattice structure may allow air to be trapped in the baffles 102 within the material in order to provide increased insulation. The lattice structure may be compressible and may be configured to return to a uncompressed form.

FIG. 2 illustrates an embodiment of an enlarged baffle 202 of the insulative baffle structure 102 shown in FIG. 1. Various designs may be modeled and then formed based on the model or other means. The baffle structure 202 is configured to define a number of apertures or lattice configurations to effect a desired insulative value and/or stiffness. The baffle structure 202 may be covered with one or more materials to facilitate insulation. The baffle structure 202 and the cover materials may be configured for particular purposes such as particular garments.

FIG. 3 shows an example baffle structure 302 manufactured using an additive manufacturing process. The baffle structure 302 may be similar to the baffle 102. Various designs may be modeled and then formed based on the model or other means. The baffle structure 202 is configured to define a number of apertures or lattice configurations to effect a desired insulative value and/or stiffness. The baffle structure 302 may be covered with one or more materials to facilitate insulation. The baffle structure 302 and the cover materials may be configured for particular purposes such as particular garments.

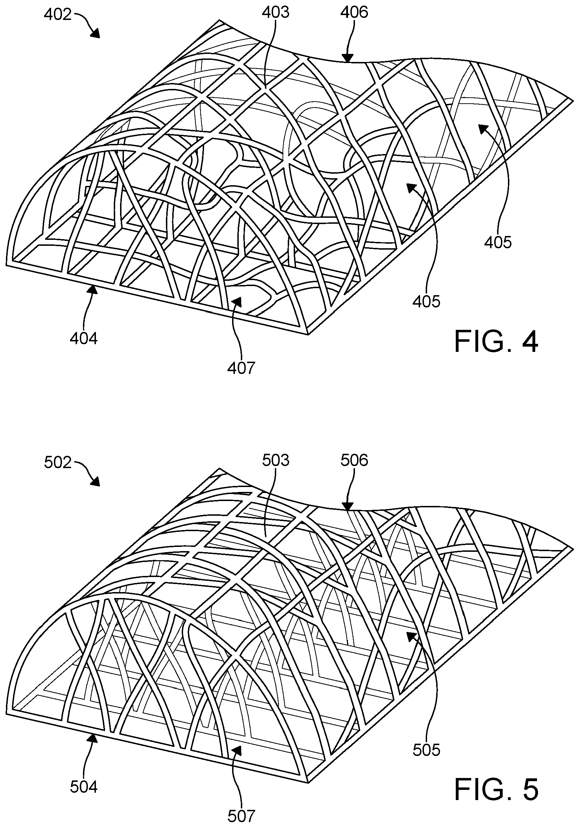

FIG. 4 illustrates a portion of an embodiment insulative baffle 402. The baffle 402 comprises a first surface 404 and a second surface 406 at least partially spaced from the first surface 404. The first surface 404 and the second surface 406 have at least one common terminal point between them. As an example, the first surface 404 may extend and join at least a portion of the second surface 406. As shown, the first surface 404 is a rectangular, planar surface and the second surface 406 is a semi-circular curvilinear surface. Other shapes and sizes may be used. The first surface 404 and the second surface 406 define a cavity 407. The first surface 404 and the second surface 406 may be at least partially formed using additive manufacturing. The first surface 404 and the second surface 406 comprise a plurality of interconnected struts 403 that define a plurality of apertures 405 through the first surface 404 and the second surface 406. The plurality of interconnected struts 403 may comprise one or more lattice structures. One or more additional struts or lattice structures are coupled to the first surface 404, the second surface 406 or to both surfaces 404, 406. A configuration of the interconnected struts 403 may be tunable to control a rigidity of the baffle 402. At least a portion of the first surface 404 or the second surface 406 may be covered by one or more layers. The layers may comprise fabric or other materials. Various material layers may be used. As an example, the material layers may be different from conventional down-proof layers since the baffle structure provides insulation without conventional down.

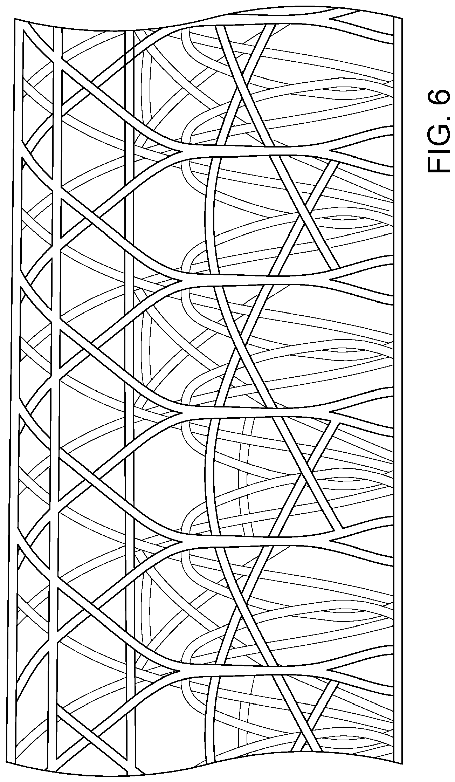

FIG. 5 illustrates a portion of an embodiment insulative baffle 502. The baffle 502 comprises a first surface 504 and a second surface 506 at least partially spaced from the first surface 504. The first surface 504 and the second surface 506 have at least one common terminal point between them. As shown, the first surface 504 is a rectangular, planar surface and the second surface 506, is a semi-circular surface. The first surface 504 and the second surface 506 define a cavity 507. The first surface 504 and the second surface 506 may be at least partially formed using additive manufacturing. The first surface 504 and the second surface 506 comprise a plurality of interconnected struts 503 that define a plurality of apertures 505 through the first surface 504 and the second surface 506. The plurality of interconnected struts 503 may comprise one or more lattice structures. One or more additional struts or lattice structures are to the first surface 504, the second surface 506 or to both surfaces 504, 506. A configuration of the interconnected struts 503 may be tunable to control a rigidity of the baffle 502. At least a portion of the first surface 504 or the second surface 506 may be covered by one or more layers. As an example, the material layers may be different from conventional down-proof layers since the baffle structure provides insulation without conventional down (other insulative materials. Various strut shapes, sizes, and patterns may be used, as illustrated for example in FIG.6.

## Claims

1. A three-dimensional insulative baffle (402) comprising:
a first surface (404) comprising by a plurality of first interconnected struts (403) that define a plurality of first apertures (405) through the first surface (404);
a second surface (406) at least partially spaced from the first surface (404) and having at least one common terminal connection point with the first surface (404), the first surface (404) comprising a plurality of second
interconnected struts that define a plurality of second apertures through the second surface (406); and
one or more third struts disposed between the first surface (404) and the second surface (406) and coupled to at least one of the first surface (404) and the second surface (406),
wherein the first surface (404) and the second surface (406) define a cavity therebetween,
wherein the one or more third struts disposed between the first surface (404) and the second surface (406) are disposed within or adjacent the cavity,
wherein the first surface (404) and the second surface (406) are capable of being deformed from a first state to a second state under a compression force to constrict a volume of the cavity and wherein the first surface (404) and the second surface (406) are capable of returning to the first state when the compression force is released, **characterized in that** the first surface (404) is a rectangular, planar surface and the second surface (406) is a semi-circular curvilinear surface such that the three-dimensional insulative baffle (402) comprises a half-column shape.

2. The three-dimensional insulative baffle (402) of claim 1, wherein the insulative baffle (402) has a generally half-column shape.

3. The three-dimensional insulative baffle (402) of claim 1, wherein the plurality of first interconnected struts (403) define a lattice structure.

4. The three-dimensional insulative baffle (402) of claim 1, wherein the plurality of second interconnected struts define a lattice structure.

5. The three-dimensional insulative baffle (402) of claim 1, wherein a plurality of the third struts disposed between the first surface (404) and the second surface (406) define a lattice structure.

6. The three-dimensional insulative baffle (402) of claim 1, wherein one or more of the first surface (404) or the second surface (406) is at least partially formed using additive manufacturing.

7. The three-dimensional insulative baffle (402) of claim 1, further comprising a first layer disposed to cover at least a portion of the first surface.

8. The three-dimensional insulative baffle (402) of claim 1, further comprising a second layer disposed to cover at least a portion of the second surface.

9. The three-dimensional insulative baffle (402) of claim 1, wherein a configuration of the first interconnected struts (403), the second interconnect struts, and the third struts disposed between the first surface (404) and the second surface (406) are tunable to control a rigidity of the three-dimensional insulative baffle (402).

10. A method of making the three-dimensional insulative baffle of claim 1.

## Patentansprüche

1. Dreidimensionaler isolierender Baffle (402), umfassend:
eine erste Oberfläche (404), umfassend durch eine Vielzahl von ersten miteinander verbundenen Streben (403), die eine Vielzahl von ersten Öffnungen (405) durch die erste Oberfläche (404) definieren;
eine zweite Oberfläche (406), die von der ersten Oberfläche (404) mindestens teilweise beabstandet ist und mindestens einen gemeinsamen Endverbindungspunkt mit der ersten Oberfläche (404) aufweist, die erste Oberfläche (404) umfassend eine Vielzahl von zweiten miteinander verbundenen Streben, die eine Vielzahl von zweiten Öffnungen durch die zweite Oberfläche (406) definieren;
und
eine oder mehrere dritte Streben, die zwischen der ersten Oberfläche (404) und der zweiten Oberfläche (406) angeordnet und mit mindestens einer der ersten Oberfläche (404) und der zweiten Oberfläche (406) gekoppelt sind,
wobei die erste Oberfläche (404) und die zweite Oberfläche (406) einen Hohlraum dazwischen definieren, wobei die eine oder die mehreren dritten Streben, die zwischen der ersten Oberfläche (404) und der zweiten Oberfläche (406) angeordnet sind, innerhalb oder angrenzend an den Hohlraum angeordnet sind,
wobei die erste Oberfläche (404) und die zweite Oberfläche (406) in der Lage sind, von einem ersten Zustand in einen zweiten Zustand unter einer Kompressionskraft verformt zu werden, um ein Volumen des Hohlraums zu begrenzen, und wobei die erste Oberfläche (404) und die zweite Oberfläche (406) in der Lage sind, in den ersten Zustand zurückzukehren, wenn die Kompressionskraft gelöst wird, **dadurch gekennzeichnet, dass** die erste Oberfläche (404) eine rechteckige, ebene Oberfläche ist und die zweite Oberfläche (406) eine halbkreisförmige kurvenförmige Oberfläche ist, derart, dass der dreidimensionale isolierende Baffle (402) eine Halbsäulenform umfasst.

2. Dreidimensionaler isolierender Baffle (402) nach Anspruch 1, wobei der isolierende Baffle (402) im Allgemeinen eine Halbsäulenform aufweist.

3. Dreidimensionaler isolierender Baffle (402) nach Anspruch 1, wobei die Vielzahl von ersten miteinander verbundenen Streben (403) eine Gitterstruktur definieren.

4. Dreidimensionaler isolierender Baffle (402) nach Anspruch 1, wobei die Vielzahl von zweiten miteinander verbundenen Streben eine Gitterstruktur definieren.

5. Dreidimensionaler isolierender Baffle (402) nach Anspruch 1, wobei eine Vielzahl der dritten Streben, die zwischen der ersten Oberfläche (404) und der zweiten Oberfläche (406) angeordnet sind, eine Gitterstruktur definieren.

6. Dreidimensionaler isolierender Baffle (402) nach Anspruch 1, wobei eine oder mehrere der ersten Oberfläche (404) oder der zweiten Oberfläche (406) mindestens teilweise unter Verwendung additiver Fertigung ausgebildet sind.

7. Dreidimensionaler isolierender Baffle (402) nach Anspruch 1, ferner umfassend eine erste Schicht, die angeordnet ist, um mindestens einen Abschnitt der ersten Oberfläche abzudecken.

8. Dreidimensionaler isolierender Baffle (402) nach Anspruch 1, ferner umfassend eine zweite Schicht, die angeordnet ist, um mindestens einen Abschnitt der zweiten Oberfläche abzudecken.

9. Dreidimensionaler isolierender Baffle (402) nach Anspruch 1, wobei eine Konfiguration der ersten miteinander verbundenen Streben (403), der zweiten miteinander verbundenen Streben und der dritten Streben, die zwischen der ersten Oberfläche (404) und der zweiten Oberfläche (406) angeordnet sind, einstellbar sind, um eine Steifigkeit des dreidimensionalen isolierenden Baffles (402) zu steuern.

10. Verfahren zum Herstellen des dreidimensionalen isolierenden Baffles nach Anspruch 1.

## Revendications

1. Déflecteur isolant tridimensionnel (402) comprenant :
une première surface (404) comprenant une pluralité de premières entretoises interreliées (403) qui définissent une pluralité de premières ouvertures (405) à travers la première surface (404) ;
une seconde surface (406) au moins partiellement espacée de la première surface (404) et ayant au moins un point de liaison terminal commun avec la première surface (404), la première surface (404) comprenant une pluralité de deuxièmes entretoises interreliées qui définissent une pluralité
de secondes ouvertures à travers la seconde surface (406) ; et
une ou plusieurs troisièmes entretoises disposées entre la première surface (404) et la seconde surface (406) et accouplées à au moins l'une parmi la première surface (404) et la seconde surface (406),
dans lequel la première surface (404) et la seconde surface (406) définissent une cavité entre elles, dans lequel la ou les troisièmes entretoises disposées entre la première surface (404) et la seconde surface (406) sont disposées à l'intérieur ou à proximité de la cavité,
dans lequel la première surface (404) et la seconde surface (406) sont capables d'être déformées d'un premier état à un second état sous une force de compression pour réduire un volume de la cavité et dans lequel la première surface (404) et la seconde surface (406) sont capables de revenir au premier état lorsque la force de compression est relâchée, **caractérisé en ce que** la première surface (404) est une surface plane rectangulaire et la seconde surface (406) est une surface curviligne semi-circulaire de telle sorte que le déflecteur isolant tridimensionnel (402) comprend une forme en demi-colonne.

2. Déflecteur isolant tridimensionnel (402) selon la revendication 1, dans lequel le déflecteur isolant (402) a une forme généralement en demi-colonne.

3. Déflecteur isolant tridimensionnel (402) selon la revendication 1, dans lequel la pluralité de premières entretoises interreliées (403) définissent une structure réticulaire.

4. Déflecteur isolant tridimensionnel (402) selon la revendication 1, dans lequel la pluralité de deuxièmes entretoises interreliées définissent une structure réticulaire.

5. Déflecteur isolant tridimensionnel (402) selon la revendication 1, dans lequel une pluralité des troisièmes entretoises disposées entre la première surface (404) et la seconde surface (406) définissent une structure réticulaire.

6. Déflecteur isolant tridimensionnel (402) selon la revendication 1, dans lequel une ou plusieurs parmi la première surface (404) ou la seconde surface (406) est au moins partiellement formée à l'aide d'une fabrication additive.

7. Déflecteur isolant tridimensionnel (402) selon la revendication 1, comprenant en outre une première couche disposée pour couvrir au moins une partie de la première surface.

8. Déflecteur isolant tridimensionnel (402) selon la revendication 1, comprenant en outre une seconde couche disposée pour couvrir au moins une partie de la seconde surface.

9. Déflecteur isolant tridimensionnel (402) selon la revendication 1, dans lequel une configuration des premières entretoises interreliées (403), des deuxièmes entretoises interreliées et des troisièmes entretoises disposées entre la première surface (404) et la seconde surface (406) sont accordables pour commander une rigidité du déflecteur isolant tridimensionnel (402).

10. Procédé de fabrication du déflecteur isolant tridimensionnel selon la revendication 1.
